# EUROPEAN PATENT APPLICATION

(11) **EP 4 799 914 A1**
(43) Date of publication of application: **02.09.2026**
(21) Application number: 24882599.4
(22) Date of filing: 05.08.2024
(51) Int. Cl.: B63B 17/00, B63B 25/16, F17C 3/02, F17C 3/04, F17C 13/00, F17C 13/04

(54) **LIQUEFIED HYDROGEN FUEL TANK, FOR SHIP, HAVING IMPROVED INSULATION PERFORMANCE DUE TO USE OF DOUBLE INSULATION LAYER AND VAPORIZED GAS**

(30) Priority: 24.10.2023 KR 20230143210
(71) Applicant: Korea Institute of Ocean Science and Technology, Busan 49111 (KR)
(72) Inventor: PARK, Byoung Jae, Daejeon 34050 (KR); KIM, Hyun Suk, Sejong-si 30115 (KR); KIM, Gun Woo, Daejeon 35210 (KR); JUNG, Dong Ho, Daejeon 34066 (KR); KI, Min Suk, Sejong-si 30141 (KR)
(74) Representative: EP&C
(86) International application number: PCT/KR2024/011510
(87) International publication number: WO 2025/089570

(57) **Abstract**

Disclosed in the present invention is a liquefied hydrogen fuel tank for a ship. A liquefied hydrogen fuel tank, for a ship, according to an embodiment of the present invention, comprises: an inner tank in which a cryogenic fluid is stored; a buffer tank layer to which are connected the ends of a plurality of connection parts, the other ends of which are connected to the inner tank, and which surrounds the outside of the inner tank; and an outer tank which surrounds the outside of the buffer tank layer, wherein a space between the inner tank and the buffer tank layer is filled with hydrogen that has been vaporized and discharged from the inner tank, thus insulating the inner tank.

## Description

### Technical Field

The present invention relates to a liquefied hydrogen fuel tank for a ship having improved thermal insulation performance using double insulation layers and vaporized gas, and more particularly, to a liquefied hydrogen fuel tank for a ship having improved thermal insulation performance using double insulation layers and vaporized gas in order to minimize generation of boil-off gas and heat loss by improving thermal insulation performance.

### Background Art

Recently, due to rapid industrialization and population growth, energy demand has continuously increased. Accordingly, there is an urgent need to secure alternative energy sources in response to the depletion of fossil fuels. In particular, Korea urgently needs measures for securing energy, as it consumes a large amount of energy while relying on imports from foreign countries for more than 90% of the energy it uses.

Hydrogen fuel is attracting attention as an alternative energy source for solving complex energy problems faced worldwide.

Such hydrogen fuel is not only the most abundant element on Earth after carbon and nitrogen, but is also a clean energy source that generates only an extremely small amount of nitrogen oxides during combustion and emits no other pollutants. In addition, hydrogen fuel can be produced using abundant water existing on Earth as a raw material and is recycled back into water after use, and therefore may be regarded as an optimal alternative energy source with no concern of depletion.

The most important issue in using such hydrogen fuel is a method of storing hydrogen. Known hydrogen storage methods include a method of compressing and storing hydrogen gas, a method of liquefying and storing hydrogen, and a storage method using a hydrogen storage alloy.

Hydrogen is supplied and stored in a liquefied state. Liquefied hydrogen is stored in an extremely low-temperature state, and a cryogenic fluid such as liquefied hydrogen is stored in a storage tank and needs to be appropriately supplied to a predetermined supply target, for example, a fuel cell or a hydrogen vehicle. Here, the storage tank generally refers to a liquefied hydrogen fuel tank for a ship, a cryogenic fluid storage tank, or the like.

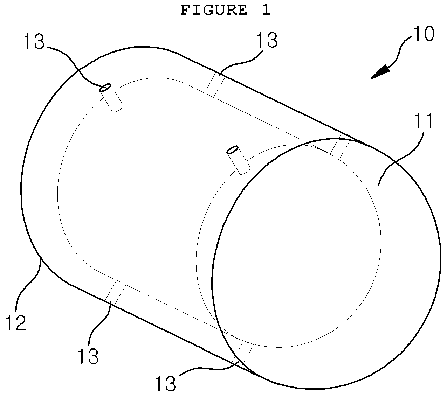

In addition to liquefied hydrogen, various types of gases such as nitrogen, helium, and natural gas are liquefied at extremely low temperatures for transportation and storage and stored in storage tanks. A general storage tank for storing such a cryogenic fluid is illustrated in FIG. 1.

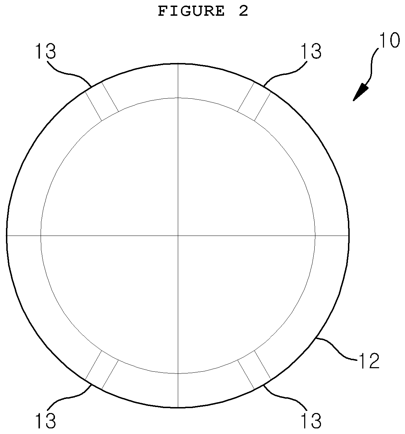

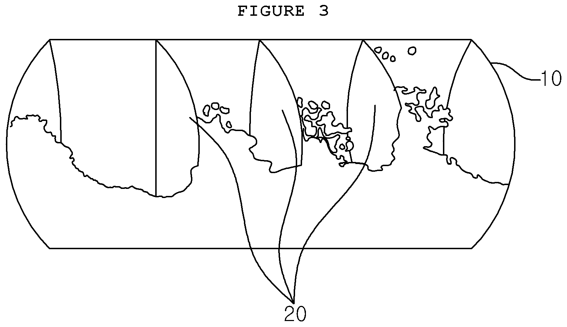

FIG. 1 is a schematic view for explaining a cryogenic fluid storage tank, FIG. 2 is a schematic view showing a cross-section of the storage tank of FIG. 1, and FIG. 3 is a schematic view showing a general swash bulkhead provided in the storage tank.

Referring to FIGS. 1 to 3 together, a storage tank (10) for storing a cryogenic fluid generally includes an inner tank part (11) in which the cryogenic fluid is stored, and an outer tank part (12) formed to surround the inner tank part (11) while being spaced apart therefrom by a predetermined distance.

At this time, in order to maintain a distance between the inner tank part (11) and the outer tank part (12), a plurality of connection parts (13) connecting the inner tank part (11) and the outer tank part (12) may be provided.

The connection parts (13) are coupled to an outer wall of the inner tank part (11) and an inner wall of the outer tank part (12), and are provided to prevent the inner tank part (11) from directly contacting the inside of the outer tank part (12) and to maintain a shape of the storage tank (10).

In addition, at least one swash bulkhead (20) is installed in the storage tank (10) at a predetermined interval, and is configured to suppress sloshing of the cryogenic fluid in the storage tank (10).

However, in the conventional connection part (13), external heat may be transferred into the inner tank part (11). In addition, vapor of the cryogenic fluid, which is vaporized by the transferred external heat and exists or remains inside the inner tank part (11), has a temperature higher than a boiling point of the stored cryogenic fluid. Accordingly, there is a problem in that storage efficiency of the cryogenic fluid may be reduced, and safety may also be reduced due to an increase in pressure caused by accumulated cryogenic fluid vapor.

In addition, the conventional swash bulkhead merely serves to partially prevent flow of fluid inside the storage tank.

In order to reduce hydrogen loss, it is most important to lower an evaporation rate of liquefied hydrogen. Accordingly, a liquefied hydrogen storage tank needs to have better thermal insulation performance than a conventional liquefied natural gas storage tank.

Meanwhile, a method of storing boil-off gas generated from a liquefied hydrogen storage tank using a hydrogen storage alloy has been proposed. However, in the case of a hydrogen storage alloy, since a hydrogen storage rate at a low temperature is poor, there is a limitation in efficiently storing boil-off gas of cryogenic liquefied hydrogen.

Korean Patent Application Publication No. 10-2020-0009348 discloses a boil-off gas treatment system for a liquefied hydrogen storage tank for a ship.

The conventional technology relates to a technology capable of efficiently utilizing and storing boil-off gas generated from a liquefied hydrogen storage tank.

However, in the conventional technology, a heat exchanger and a hydrogen storage tank are arranged in an empty space formed between the liquefied hydrogen storage tank and a bottom surface of a hull. However, the space is limited, and there is a disadvantage in that a thermal insulation effect is not excellent.

### [Prior Art]

### [Patent Documents]

(Patent Document 1) Korean Patent Application Publication No. 10-2020-0009348

### Disclosure

### Technical Problem

An embodiment of the present invention is intended to provide a liquefied hydrogen fuel tank for a ship having improved thermal insulation performance using double insulation layers and vaporized gas in order to significantly improve thermal insulation performance by overcoming the problems of the conventional technology.

### Technical Solution

According to an aspect of the present invention, there is provided a liquefied hydrogen fuel tank for a ship, including: an inner tank in which a cryogenic fluid is stored; a buffer tank layer to which other ends of a plurality of connection parts are connected, one end of each of the plurality of connection parts being connected to the inner tank, the buffer tank layer surrounding an outside of the inner tank; and an outer tank surrounding an outside of the buffer tank layer, wherein a space between the inner tank and the buffer tank layer is filled with hydrogen vaporized and discharged from the inner tank, thereby insulating the inner tank.

### Advantageous Effects

The liquefied hydrogen fuel tank for a ship having improved thermal insulation performance using double insulation layers and vaporized gas according to the present invention has the following effects.

First, thermal insulation performance can be improved by using heat of hydrogen that is vaporized and discharged.

Second, thermal efficiency can be improved by using waste heat.

Third, since the structure is simple, thermal insulation performance can be improved at low cost.

Fourth, by allowing a heat conduction path to be increased without impairing connection strength between the inner tank and the outer tank, heat conduction through the connection parts can be suppressed.

### Description of Drawings

FIG. 1 is a schematic view for explaining a cryogenic fluid storage tank.
FIG. 2 is a schematic view showing a cross-section of the storage tank of FIG. 1.
FIG. 3 is a schematic view showing a general swash bulkhead provided in the storage tank.
FIG. 4 is a schematic view showing an internal structure of a liquefied hydrogen fuel tank for a ship having improved thermal insulation performance using double insulation layers and vaporized gas according to an embodiment of the present invention.
FIG. 5 is a schematic view generally showing a buffer tank layer and an A-A'cross-section of the liquefied hydrogen fuel tank for a ship having improved thermal insulation performance using double insulation layers and vaporized gas according to an embodiment of the present invention.
FIG. 6 is a schematic view showing an example of thermal insulation of the liquefied hydrogen fuel tank for a ship having improved thermal insulation performance using double insulation layers and vaporized gas according to an embodiment of the present invention.
FIG. 7 is a schematic view showing an internal structure of a liquefied hydrogen fuel tank for a ship having improved thermal insulation performance using double insulation layers and vaporized gas according to another embodiment of the present invention.
FIG. 8 is a schematic view generally showing a buffer tank layer and a C-C'cross-section of the liquefied hydrogen fuel tank for a ship having improved thermal insulation performance using double insulation layers and vaporized gas according to another embodiment of the present invention.
FIG. 9 is a schematic view showing an example of thermal insulation of the liquefied hydrogen fuel tank for a ship having improved thermal insulation performance using double insulation layers and vaporized gas according to another embodiment of the present invention.

### Best Mode

The embodiments described below are provided so that those skilled in the art can easily understand the technical spirit of the present invention, and the present invention is not limited thereto. In addition, matters shown in the accompanying drawings are schematic drawings for easily explaining the embodiments of the present invention and may differ from forms actually implemented.

When a component is referred to as being connected or coupled to another component, it should be understood that the component may be directly connected or coupled to the other component, or another component may be present therebetween.

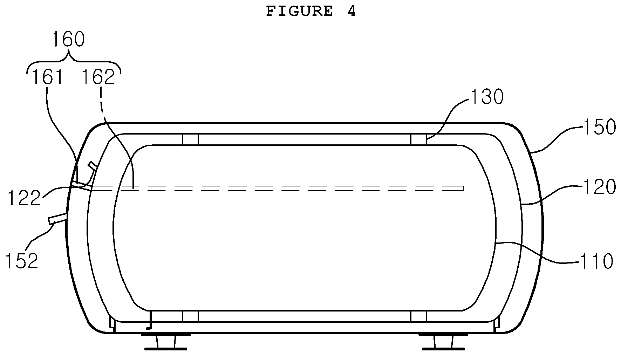

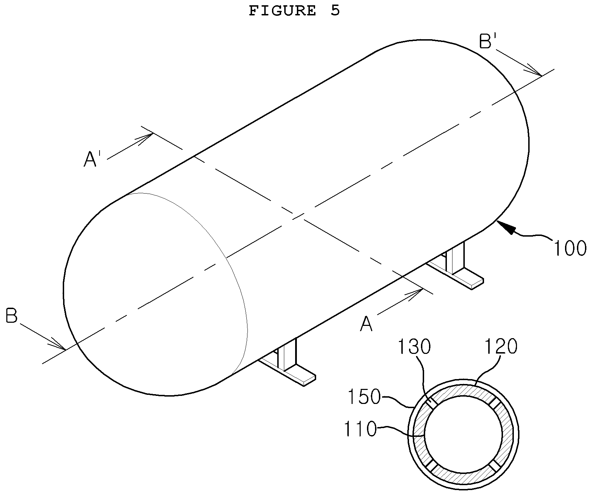

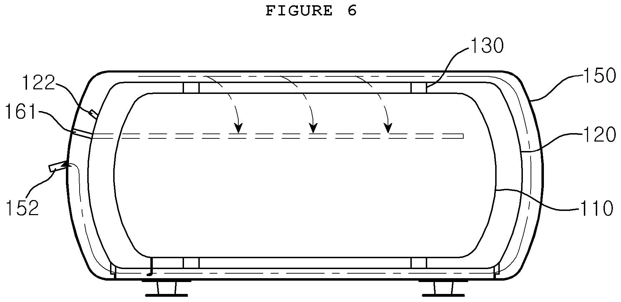

FIG. 4 is a schematic vertical cross-sectional view taken along line B-B' of FIG. 5, showing an internal structure of a liquefied hydrogen fuel tank for a ship having improved thermal insulation performance using double insulation layers and vaporized gas according to an embodiment of the present invention, FIG. 5 is a schematic view generally showing a buffer tank layer and an A-A' cross-section of the liquefied hydrogen fuel tank for a ship having improved thermal insulation performance using double insulation layers and vaporized gas according to an embodiment of the present invention, FIG. 6 is a schematic view showing an example of thermal insulation of the liquefied hydrogen fuel tank for a ship having improved thermal insulation performance using double insulation layers and vaporized gas according to an embodiment of the present invention.

Referring to FIGS. 4 to 6 together with FIGS. 1 to 3, a liquefied hydrogen fuel tank (100) for a ship having improved thermal insulation performance using double insulation layers and vaporized gas according to an embodiment of the present invention includes an inner tank (110), a buffer tank layer (120), a connection support system (130), and an outer tank (150).

The inner tank (110) is a cylindrical structure having a storage part, which is an accommodation space, formed therein, and is preferably installed such that a longitudinal direction thereof extends along the ground. The inner tank (110) has a shape having a length greater than a diameter thereof, and a cryogenic fluid such as liquefied hydrogen is stored therein.

A material of the buffer tank layer (120) is preferably copper.

The buffer tank layer (120) surrounds an outside of the inner tank (110), and other ends of a plurality of connection parts, one end of each of which is connected to the inner tank (110), are connected to the buffer tank layer (120).

A space between the buffer tank layer (120) and the inner tank (110) is filled with hydrogen vaporized and discharged from the inner tank (110).

The buffer tank layer (120) has a cylindrical shape having a diameter greater than that of the inner tank (110). The buffer tank layer (120) is connected to the inner tank (110) by the plurality of connection parts (130).

The plurality of connection parts (130) are provided to be spaced apart from each other in a circumferential direction, with some of the plurality of connection parts (130) supporting a lower portion about an axis of the liquefied hydrogen fuel tank (100) for a ship.

One end of each of the plurality of connection parts (130) is connected to an outer surface of the inner tank (110), and the other end of each of the plurality of connection parts (130) is connected to an inner surface of the buffer tank layer (120).

In addition, the buffer tank layer (120) is provided with a discharge valve (122) configured to discharge gas into a space between the outer tank (150) and the buffer tank layer (120).

The discharge valve (122) is opened when a set pressure is exceeded, thereby discharging gas into the space between the outer tank (150) and the buffer tank layer (120).

The outer tank (150) has a size greater than that of the buffer tank layer (120) and has a structure surrounding an outside of the buffer tank layer (120).

The outer tank (150) has a discharge part (152) formed at one end portion in a longitudinal direction.

The outer tank (150) is connected to the buffer tank layer (120) by a plurality of connection parts (130).

According to the present invention, in the liquefied hydrogen fuel tank (100) for a ship, a space between the inner tank (110) and the buffer tank layer (120), and a space between the outer tank (150) and the buffer tank layer (120), are each in a vacuum state. The respective vacuum spaces more efficiently block heat transfer.

In addition, a partition member (160) configured to prevent movement of hydrogen vaporized from the inner tank (110) is provided between the outer tank (150) and the buffer tank layer (120).

The partition member (160) comprises a first partition (161) located at one end portion of the outer tank (150) and the buffer tank layer (120). That is, the first partition (161) is located at one end portion in a longitudinal direction of the liquefied hydrogen fuel tank (100) for a ship.

The partition member (160) comprises a second partition (162) located at side portions of the outer tank (150) and the buffer tank layer (120). That is, the second partitions (162) are respectively located at both side portions in a longitudinal direction in plan view of the liquefied hydrogen fuel tank (100) for a ship.

Preferably, end-side portions of the second partitions (162) adjacent to the first partition (161) are connected to each other.

The partition member (160) serves to block movement of hydrogen that is vaporized and discharged, and to guide the hydrogen between the outer tank (150) and the buffer tank layer (120). The partition member (160) guides the vaporized and discharged hydrogen to move from one end toward the other end in the longitudinal direction of the liquefied hydrogen fuel tank (100) for a ship, move downward, and then move from the other end toward the one end.

An operating relationship of the liquefied hydrogen fuel tank (100) for a ship having improved thermal insulation performance using double insulation layers and vaporized gas according to an embodiment of the present invention will now be described. The space between the inner tank (110) and the buffer tank layer (120) is filled with hydrogen vaporized and discharged from the inner tank (110), thereby insulating the inner tank (110).

Subsequently, when a set pressure is exceeded, the discharge valve (122) discharges vaporized hydrogen filled in the space between the inner tank (110) and the buffer tank layer (120) into the space between the outer tank (150) and the buffer tank layer (120). The vaporized hydrogen then circulates through the space between the outer tank (150) and the buffer tank layer (120) and is discharged through the discharge part (152).

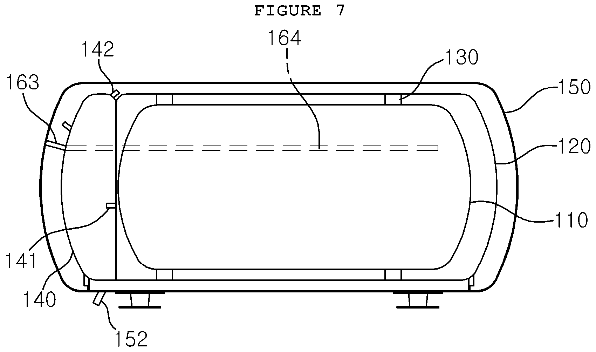

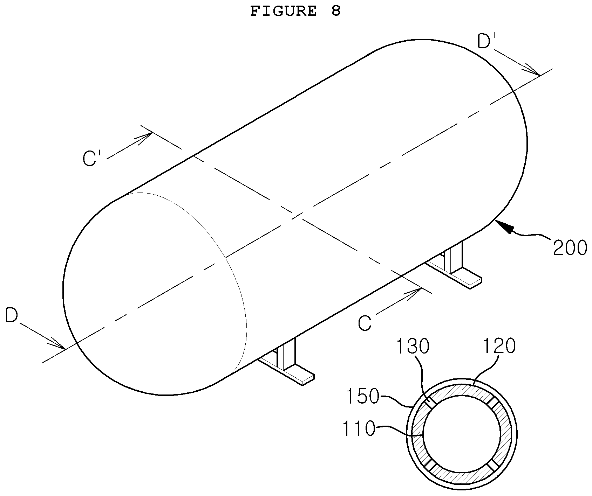

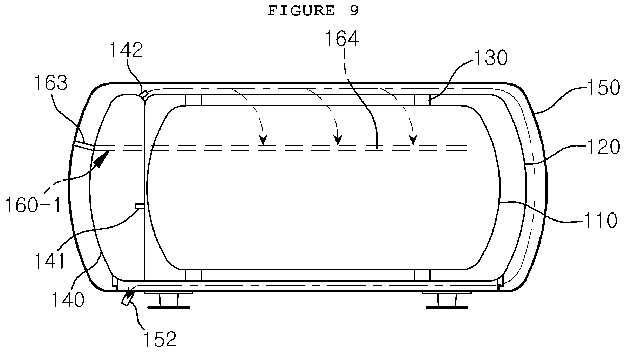

FIG. 7 is a schematic vertical cross-sectional view taken along line D-D' of FIG. 8, showing an internal structure of a liquefied hydrogen fuel tank for a ship having improved thermal insulation performance using double insulation layers and vaporized gas according to another embodiment of the present invention, FIG. 8 is a schematic view generally showing a buffer tank layer and a C-C' cross-section of the liquefied hydrogen fuel tank for a ship having improved thermal insulation performance using double insulation layers and vaporized gas according to another embodiment of the present invention, FIG. 9 is a schematic view showing an example of thermal insulation of the liquefied hydrogen fuel tank for a ship having improved thermal insulation performance using double insulation layers and vaporized gas according to another embodiment of the present invention.

Referring to FIGS. 7 to 9 together, a liquefied hydrogen fuel tank (200) for a ship having improved thermal insulation performance using double insulation layers and vaporized gas according to another embodiment of the present invention includes an inner tank (110), a buffer tank layer (120), a buffer part (140), and an outer tank (150).

The inner tank (110) stores a cryogenic fluid.

The buffer tank layer (120) surrounds an outside of the inner tank (110), and other ends of a plurality of connection parts, one end of each of which is connected to the inner tank (110), are connected to the buffer tank layer (120).

The buffer part (140) is coupled to one end portion of the buffer tank layer (120) and is filled with hydrogen vaporized and discharged from the inner tank (110).

The buffer part (140) is provided with an inlet valve (141) through which gas is introduced into the buffer part (140) from a space between the inner tank (110) and the buffer tank layer (120).

The buffer part (140) is provided with a discharge valve (142) configured to discharge gas into a space between the outer tank (150) and the buffer tank layer (120).

The outer tank (150) surrounds the buffer tank layer (120) and the buffer part (140) from the outside.

A space between the outer tank (150) and the buffer tank layer (120) insulates the inner tank (110) and the buffer tank layer (120) outside the inner tank (110) with hydrogen discharged from the buffer part (140).

A partition member (160-1) configured to prevent movement of hydrogen discharged from the buffer part (140) is provided between the outer tank (150) and the buffer part (140) and between the outer tank (150) and the buffer tank layer (120).

The partition member (160-1) comprises a third partition (163) located between the outer tank (150) and the buffer part (140).

The partition member (160-1) comprises a fourth partition (164) located at a side portion between the outer tank (150) and the buffer tank layer (120).

The fourth partitions (164) are respectively located at both side portions between the outer tank (150) and the buffer tank layer (120) in a longitudinal direction in plan view, and descriptions of other identical portions will be omitted.

An operating relationship of the liquefied hydrogen fuel tank (200) for a ship having improved thermal insulation performance using double insulation layers and vaporized gas according to another embodiment of the present invention will now be described. The space between the inner tank (110) and the buffer tank layer (120) is filled with hydrogen vaporized and discharged from the inner tank (110), thereby insulating the inner tank (110).

Subsequently, gas is introduced into the buffer part (140) through the inlet valve (141), so that the buffer part (140) is filled with the gas.

When an internal pressure of the buffer part (140) exceeds a set pressure, the buffer part (140) discharges vaporized hydrogen filled therein into the space between the outer tank (150) and the buffer tank layer (120) through the discharge valve (142).

The discharged vaporized hydrogen is guided by the partition member (160-1), circulates through the space between the outer tank (150) and the buffer tank layer (120), and is discharged through the discharge part (152).

In the present specification, the fluid may mean a cryogenic fluid that is a liquefied gas in which a predetermined gas is liquefied. Although the fluid is described by taking liquefied hydrogen, in which hydrogen is liquefied, as an example, the present invention is not necessarily limited thereto. For example, the fluid may be a cryogenic fluid in which various types of gases, such as liquefied nitrogen, liquefied helium, and liquefied natural gas, as well as hydrogen, are liquefied, or may be understood to include oils such as gasoline and diesel, or other various types of liquids. It will be readily inferred by those skilled in the art to which the present invention pertains that the technical spirit of the present invention described below may be applied regardless of the type of such fluid.

In addition, according to an embodiment of the present invention, the storage tank may be configured to comprise an inner tank in which a fluid is stored, and an outer tank formed to surround the inner tank while being spaced apart from the inner tank by a predetermined distance. In this case, a storage tank, unless otherwise described, may mean the inner tank in which the cryogenic fluid is directly stored.

In addition, the storage tank may be mounted on a predetermined transportation means for transporting a cryogenic fluid. The transportation means may be implemented as any type of transportation means capable of transporting various liquids, such as a tank lorry or a ship. When the technical spirit of the present invention described below is applied, more stable transportation of the fluid may be possible.

When the storage tank is mounted on and transported by a transportation means, excessive sloshing of the fluid stored inside the storage tank may occur due to a road surface or water surface condition, or during operation of the transportation means, for example, sudden stopping, sudden starting, or sharp turning. In order to suppress such excessive sloshing of the fluid during transportation, various types of swash bulkheads, or slosh baffles, may be used for storage tanks mounted on transportation means. Such swash bulkheads may be applied in various shapes and numbers depending on the volume of the storage tank or other requirements.

Therefore, the liquefied hydrogen fuel tank for a ship having improved thermal insulation performance using double insulation layers and vaporized gas according to the present invention can improve thermal insulation performance by using heat of hydrogen that is vaporized and discharged, and can improve thermal efficiency by using waste heat.

In addition, since the structure is simple, thermal insulation performance can be improved at low cost, and heat conduction through the connection parts can be suppressed by allowing a heat conduction path to be increased without impairing connection strength between the inner tank and the outer tank.

Those skilled in the art to which the present invention pertains will understand that the present invention may be embodied in other specific forms without changing the technical spirit or essential features thereof. Therefore, the embodiments described above are merely the most preferred embodiments selected and presented from among various possible embodiments in order to help those skilled in the art understand the present invention. The technical spirit of the present invention is not necessarily limited or restricted only by the presented embodiments, and various changes, additions, and modifications may be made without departing from the technical spirit of the present invention, and other equivalent embodiments are also possible.

### [Explanation of Reference Numerals]

10: storage tank
11: inner tank part
12: outer tank part
13: connection part
20: swash bulkhead
100, 200: liquefied hydrogen fuel tank for ship
110: inner tank
120: buffer tank layer
122: discharge valve
130: connection support system
140: buffer part
141: inlet valve
142: discharge valve
150: outer tank
152: discharge part
160, 160-1: partition member
161: first partition
162: second partition
163: third partition
164: fourth partition

### Industrial Applicability

The present invention has industrial applicability in industries related to manufacturing liquefied hydrogen fuel tanks for ships, since thermal insulation performance can be improved to minimize generation of boil-off gas and heat loss.

## Claims

1. A liquefied hydrogen fuel tank for a ship, comprising:
an inner tank in which a cryogenic fluid is stored;
a buffer tank layer to which other ends of a plurality of connection parts are connected, one end of each of the plurality of connection parts being connected to the inner tank, the buffer tank layer surrounding an outside of the inner tank; and
an outer tank surrounding an outside of the buffer tank layer,
wherein a space between the inner tank and the buffer tank layer is filled with hydrogen vaporized and discharged from the inner tank, thereby insulating the inner tank.

2. The liquefied hydrogen fuel tank for a ship of claim 1, wherein a material of the buffer tank layer is copper.

3. The liquefied hydrogen fuel tank for a ship of claim 1, wherein a partition member configured to prevent movement of hydrogen vaporized from the inner tank is provided between the outer tank and the buffer tank layer.

4. The liquefied hydrogen fuel tank for a ship of claim 3, wherein the partition member comprises a first partition located at one end portion of the outer tank and the buffer tank layer.

5. The liquefied hydrogen fuel tank for a ship of claim 4, wherein the partition member comprises a second partition located at side portions of the outer tank and the buffer tank layer.

6. The liquefied hydrogen fuel tank for a ship of claim 1, wherein the buffer tank layer is provided with a discharge valve configured to discharge gas into a space between the outer tank and the buffer tank layer.

7. A liquefied hydrogen fuel tank for a ship, comprising:
an inner tank in which a cryogenic fluid is stored;
a buffer tank layer to which other ends of a plurality of connection parts are connected, one end of each of the plurality of connection parts being connected to the inner tank, the buffer tank layer surrounding an outside of the inner tank;
a buffer part coupled to one end portion of the buffer tank layer and filled with hydrogen vaporized and discharged from the inner tank; and
an outer tank surrounding outsides of the buffer tank layer and the buffer part,
wherein a space between the inner tank and the buffer tank layer is filled with hydrogen vaporized and discharged from the inner tank, thereby insulating the inner tank.

8. The liquefied hydrogen fuel tank for a ship of claim 7, wherein the buffer part is provided with an inlet valve through which gas is introduced from the space between the inner tank and the buffer tank layer.

9. The liquefied hydrogen fuel tank for a ship of claim 8, wherein the buffer part is provided with a discharge valve configured to discharge gas into a space between the outer tank and the buffer tank layer.

10. The liquefied hydrogen fuel tank for a ship of claim 9, wherein a space between the outer tank and the buffer tank layer insulates the buffer tank layer with hydrogen discharged from the buffer part.

11. The liquefied hydrogen fuel tank for a ship of claim 7, wherein a partition member configured to prevent movement of hydrogen discharged from the buffer part is provided between the outer tank and the buffer part and between the outer tank and the buffer tank layer.

12. The liquefied hydrogen fuel tank for a ship of claim 11, wherein the partition member comprises a third partition located between the outer tank and the buffer tank layer.

13. The liquefied hydrogen fuel tank for a ship of claim 12, wherein the partition member comprises a fourth partition located at a side portion between the outer tank and the buffer tank layer.
